# EUROPÄISCHE PATENTSCHRIFT

(11) **EP 0 696 524 B1**
(45) Veröffentlichungstag und Bekanntmachung des Hinweises auf die Patenterteilung: **20.05.1998**
(21) Anmeldenummer: 95111956.9
(22) Anmeldetag: 29.07.1995
(51) Int. Cl.: B60K 25/00

(54) **Zapfwellensteuerung**
Power take-off control
Contrôle de prise de force

(30) Priorität: 11.08.1994 DE 4428368
(43) Veröffentlichungstag der Anmeldung: 14.02.1996
(73) Patentinhaber: DEERE & COMPANY, Moline, Illinois 61265 (US)
(72) Erfinder: Hollstein, Jürgen, D-68259 Mannheim (DE); Redemann, Gerd, D-68219 Mannheim (DE)
(74) Vertreter: Feldmann, Bernhard

(56) Entgegenhaltungen:
- DE-A- 2 605 681
- DE-A- 2 651 147
- DE-A- 3 431 433
- US-A- 3 793 908
- US-A- 5 280 282

## Beschreibung

Die Erfindung betrifft eine Zapfwellensteuerung zum Ein- und Abschalten wenigstens einer Fahrzeugzapfwelle mit einem am Fahrzeugbedienungsstand angeordneten Hauptschaltelement und einem an der Fahrzeugperipherie angeordneten, als Tastschalter ausgebildeten Fernschaltelement zur Fernbetätigung der Zapfwelle.

Derartige Zapfwellensteuerungen finden bei Ackerschleppern Anwendung. Dabei ist die Heck- oder Frontzapfwelle über Drucktasten aus der Schlepperkabine oder über einen Druckknopf vom Schlepperheck aus ein- oder ausschaltbar. Bei den bekannten Zapfwellensteuerungen mit Fernbedienung können jedoch unsachgemäße Bedienung oder Systemfehler zu Gefährdungen führen.

Die der Erfindung zugrunde liegende Aufgabe wird darin gesehen, eine Zapfwellensteuerung der eingangs genannten Art anzugeben, die einen hohen Sicherheitsstandard bei gutem Bedienungskomfort erfüllt und mit einfachen, kostengünstigen Mitteln realisierbar ist. Die Zapfwellensteuerung soll sich gleichermaßen für Front und Heckzapfwellen eignen.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen hervor.

Erfindungsgemäß ist eine Steuereinrichtung vorgesehen, die mit dem Hauptschaltelement und dem Fernschaltelement verbunden ist. Am Fahrzeugbedienungsstand (Fahrzeugkabine) befindet sich ein an die Steuereinrichtung angeschlossenes Auswahlschaltelement, das der Umschaltung zwischen einem Standardmodus, in dem die Zapfwelle von dem Hauptschaltelement ein und abschaltbar ist, in einen Fernbedienungsmodus, in dem die Zapfwelle von dem Fernschaltelement ein- und abschaltbar ist, dient.

Das Hauptschaltelement kann beispielsweise als Umschalter zur Erzeugung von Ein- und Ausschaltimpulsen für die Zapfwelle ausgebildet sein. Das Fernschaltelement ist außerhalb des Bedienungsstandes beispielsweise am rechten und/oder linken Kotflügel angebracht. Bei der Steuereinrichtung handelt es sich vorzugsweise um eine programmierbare elektronische Steuereinheit mit Festspeicher, durch die viele der nachfolgend beschriebenen Funktionen bzw. der in den Patentansprüchen enthaltenen Funktionen ausführbar sind.

Ist der Standardmodus eingeschaltet, so läßt sich die Zapfwelle von dem in der Fahrzeugkabine angeordneten Hauptschaltelements ein- und ausschalten. In diesem Betriebszustand kann vorzugsweise auch mittels des Fernschaltelements die Zapfwelle jederzeit ausgeschaltet werden. Eine Einschaltung mit dem Fernschaltelement ist jedoch nicht möglich.

Ist der Fernbedienungsmodus aktiviert, so läßt sich die Zapfwelle jederzeit durch Drücken des Fernschaltelements ein- bzw. ausschalten. Das Ausschalten kann auch durch das Hauptschaltelement in der Fahrzeugkabine erfolgen. Um Schaltkonflikte einer Person A, die sich in der Fahrzeugkabine befindet und einer möglichen Person B, die sich außerhalb der Fahrzeugkabine, beispielsweise am Fahrzeugheck befindet, zu vermeiden, muß jedoch zum Einschalten der Zapfwelle in der Fahrzeugkabine der Fernbedienungsmodus verlassen werden.

Um den Fernbedienungsmodus zu aktivieren, sollte aus Sicherheitsgründen vorzugsweise die Zapfwelle ausgeschaltet sein. Dann kann zweckmäßigerweise der Fernbedienungsmodus durch das Auswahlelement vorgewählt werden. Die Vorwahl des Fernbedienungsmodus wird durch eine Fernmodusleuchtanzeige in der Fahrzeugkabine angezeigt. Um den Fernbedienungsmodus komplett zu aktivieren und das Einschalten der Zapfwelle über das Fernschaltelement zu ermöglichen wird nun das Hauptschaltelement eingeschaltet. Das Einschalten des Hauptschaltelements und damit das Aktivieren der Fernbedienungsfunktion läßt sich automatisch akustisch und optisch anzeigen. Diese Anzeige erfolgt beispielsweise durch ein schnelles Tonsignal in der Fahrzeugkabine mit einer Signaltonfolge von z. B. 3 Hz, und durch eine Zapfwellenanzeigeleuchte, die zu blinken beginnt.

Um Personen, die sich außerhalb der Fahrzeugkabine aufhalten, das Aktivieren der Fernbedienungsfunktion zu signalisieren, beginnen zweckmäßiger Weise die Warnblinkleuchten des Fahrzeuges automatisch im Warnblinkmodus zu blinken.

Wird das Fernschaltelement im Fernbedienungsmodus lediglich kurzzeitig betätigt, so ist es aus Sicherheitsgründen vorteilhaft, wenn die Zapfwelle nur für die Betätigungsdauer eingeschaltet bleibt und danach wieder automatisch ausgeschaltet wird. Ist die Betätigungsdauer länger als beispielsweise 4 Sekunden, so bleibt die Zapfwelle auch nach dem Loslassen des Fernschaltelements in Betrieb. Durch ein nochmaliges Drücken des Fernschaltelements (oder durch Ausschalten des Hauptschaltelements) läßt sich die Zapfwelle wieder ausschalten.

Um die Bedienung des Fernschaltelements im Fernbedienungsmodus zu erleichtern und der Bedienungsperson ein Zeitgefühl zu vermitteln, schaltet sich gemäß einer Weiterbildung der Erfindung beim Betätigen des Fernschaltelements die Warnblinkfunktion automatisch ab, und die Warnblinkleuchten gehen für eine Zeitdauer von beispielsweise 4 Sekunden auf Dauerlicht. Falls nach Ablauf dieser Zeit das Fernschaltelement immer noch betätigt ist, erlöschen die Warnblinkleuchten automatisch und zeigen hiermit an, daß die Zapfwelle jetzt permanent eingeschaltet ist und die Bedienungsperson das Fernschaltelement loslassen kann, ohne daß die Zapfwelle automatisch ausgeschaltet wird.

In der Kabine wird vorzugsweise das Betätigen des Fernschaltelements akustisch und/oder optisch angezeigt. Dies erfolgt dadurch, daß das schnelle Tonsignal, welches die Aktivierung des Fernbedienungsmodus anzeigt seine Taktfrequenz ändert und die Betätigungsdauer des Fernschaltelements durch 4 Tonsignale mit jeweils einem Signalton pro abgelaufener Sekunde begleitet. Die Zapfwellenanzeigeleuchte geht gleichzeitig für die Zeit, in der die Zapfwelle eingeschaltet ist, in Dauerlicht.

Wird die Zapfwelle im Fernbedienungsmodus mittels des Fernschaltelements abgeschaltet, so erfolgt in der Fahrzeugkabine wieder die akustische und optische Information, das der Fernbedienungsmodus aktiviert, die Zapfwelle jedoch nicht eingeschaltet ist. Ferner wird die Warnblinkfunktion außerhalb der Fahrzeugkabine automatisch eingeschaltet.

Um Störungen außerhalb des elektrischen Systems zu erkennen, wird zweckmäßiger Weise die Zapfwellendrehzahl sowohl beim Anlaufen als auch während des Betriebs erfaßt. Wenn die Zapfwellendrehzahl für eine vorgebbare Zeitdauer von beispielsweise 5 Sekunden nach dem Einschalten der Zapfwelle eine vorgebbare Drehzahl von beispielsweise 100 Umdrehungen pro Minute nicht erreicht hat, oder wenn sie während ihres Betriebs für diese Zeitdauer die vorgegebene Drehzahl unterschreitet, wird die Zapfwelle automatisch abgeschaltet und kann erst dann wieder eingeschaltet werden, wenn vorher alle Schaltelemente in ihre Aus- oder Neutralstellung gebracht wurden. Durch diese Funktion wird vermieden, daß beispielsweise elektrische, mechanische oder hydraulische Fehler die Zapfwelle zeitweise zum Stillstand bringen und dann unkontrolliert wieder beschleunigen können.

Ferner ist es vorteilhaft, daß die Steuereinheit Überwachungsmittel enthält, die die Funktionalität der Bauelemente der Zapfwellensteuerung laufend überwachen und bei Auftreten von Fehlern die Zapfwelle automatisch abschalten und gegebenenfalls Warnsignale abgeben.

Die erfindungsgemäße Zapfwellensteuerung ermöglicht einen zuverlässigen und sicheren Zapfwellenbetrieb mit hohem Bedienungskomfort. Sie ist mit einfachen Mitteln realisierbar und bedient sich im wesentlichen der Bauelemente, die bereits an dem Fahrzeug vorhanden sind. Zur Steuerung der einzelnen Funktionen läßt sich ein elektronischer Baustein verwenden, der in vielen modernen Fahrzeugen bereits vorhanden ist und lediglich entsprechend programmiert werden muß. Die optischen und akustischen Anzeige- und Warnsignale erleichtern die Bedienung und warnen die Bedienungsperson bei gefahrvollen Betriebszuständen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Schaltungsschema einer erfindungsgemäßen Zapfwellensteuerung und
- Fig. 2: ein Zustandsdiagramm der erfindungsgemäßen Zapfwellensteuerung.

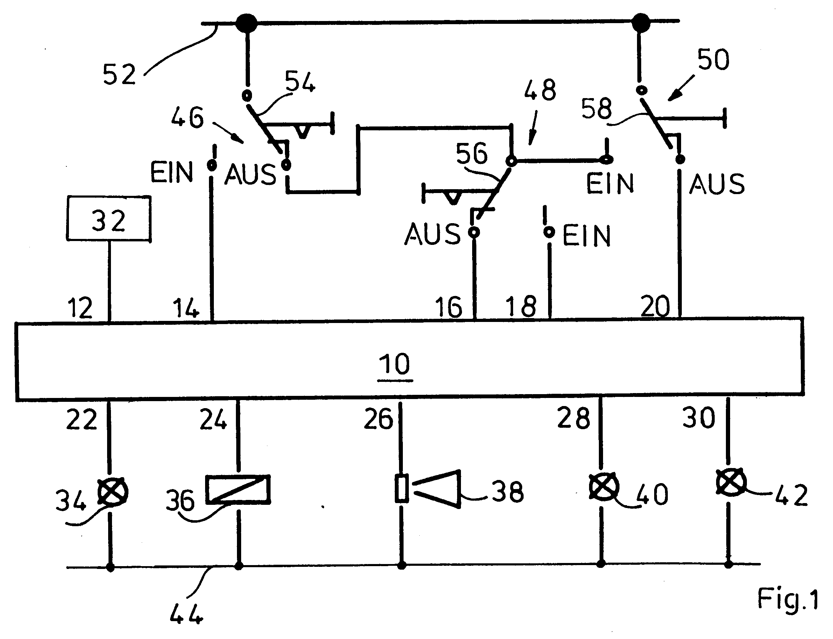

Die in Fig. 1 dargestellte Zapfwellensteuerung enthält eine elektronische Steuereinheit 10, deren Funktionen und Vorgaben programmierbar sind und die einen Festspeicher zum Speichern von Größen enthält. Die Steuereinheit 10 umfaßt ferner nicht näher dargestellte Signalumformer, Steuerrelais und dergleichen, die der elektrischen Anpassung der angeschlossenen Komponenten dienen. Die dargestellte Steuereinheit 10 enthält fünf Eingänge 12, 14, 16, 18, 20 und fünf Ausgänge 22, 24, 26, 28, 30, sie kann jedoch in der Praxis noch weitere Anschlüsse aufweisen, die für andere, hier nicht beschriebene Funktionen nützlich sind.

An den Eingang 12 ist ein Zapfwellendrehzahlmesser 32 angeschlossen. An die Ausgänge 22, 24, 26, 28 und 30 sind die Warnblinkleuchten 34 des Fahrzeuges, von denen lediglich eine dargestellt wurde, eine Zapfwellenmagnetspule 36 zur Steuerung einer nicht gezeigten Zapfwellenkupplung, eine akustische Warneinrichtung 38 sowie eine Fernbedienungsanzeigeleuchte 40 und eine Zapfwellenanzeigeleuchte 42, die sich auf einer nicht gezeigten Bedienungskonsole in der Fahrzeugkabine befinden, angeschlossen. Die an die Ausgänge 22, 24, 26, 28 und 30 angeschlossenen Geräte sind mit ihrem jeweils anderen elektrischen Anschluß mit dem Fahrzeugchassis 44 verbunden.

Aus Fig. 1 gehen ferner ein Zapfwellenhauptschalter 46 und ein Fernbedienungswahlschalter 48, die auf der Bedienungskonsole angeordnet sind, sowie ein auf einem hinteren Kotschützer des Fahrzeuges angeordneter Zapfwellenfernschalter 50 hervor.

Der Zapfwellenhauptschalter 46 ist ein Umschalter dessen an die Fahrzeugbatterie 52 angeschlossenes Schaltelements 54 von Hand zwischen einer EIN- und einer AUS-Stellung umschaltbar ist. In der EIN-Stellung wird die Fahrzeugbatterie 52 unmittelbar mit dem Eingang 14 der Steuereinheit 10 verbunden. In der AUS-Stellung verbindet der Zapfwellenhauptschalter 46 die Fahrzeugbatterie 52 mit dem Schaltelement 56 des Fernbedienungswahlschalters 48.

Der Fernbedienungswahlschalter 48 ist ebenfalls ein zwischen zwei Stellungen von Hand umschaltbarer Schalter. Durch Umschaltung läßt sich sein Schaltelement 56 entweder wahlweise mit dem Eingang 16 (AUS-Stellung ) oder dem Eingang 18 (EIN-Stellung ) der Steuereinheit 10 verbinden.

Bei dem Zapfwellenfernschalter 50 handelt es sich um einen von Hand betätigbaren Tastschalter, der nach jeder Betätigung in seine dargestellte Ruhelage (AUS-Stellung ) zurückkehrt. Sein Schaltelement 58 ist an die Fahrzeugbatterie 52 angeschlossen und verbindet diese in seiner Ruhelage mit dem Eingang 20 der Steuereinheit 10. Wird der Zapfwellenfernschalter 50 betätigt (EIN-Stellung ), so verbindet sein Schaltelement 58 die Fahrzeugbatterie 52 mit dem Schaltelement 56 des Fernbedienungswahlschalters 48.

Durch die jeweilige Stellung der Schalter 46, 48 und 50 erhält die Steuereinheit 10 Steuersignale, die von ihr ausgewertet werden. Aufgrund der Stellung der Schalter 46, 48, 50 nimmt die Steuereinheit 10 eine Ansteuerung der Zapfwellenkupplung und der optischen und akustischen Anzeigen entsprechend der Erfindung vor.

**TABELLE**

| Fall | EINGANG | | | | STATUS | SCHALTER | | |
|---|---|---|---|---|---|---|---|---|
| | 14 | 16 | 18 | 20 | | 46 | 48 | 50 |
| 1 | 0 | 0 | 0 | 0 | ungültig | | | |
| 2 | 0 | 0 | 0 | 1 | ungültig | | | |
| 3 | 0 | 0 | 1 | 0 | gültig | AUS | EIN | EIN |
| 4 | 0 | 0 | 1 | 1 | gültig | AUS | EIN | AUS |
| 5 | 0 | 1 | 0 | 0 | gültig | AUS | AUS | EIN |
| 6 | 0 | 1 | 0 | 1 | gültig | AUS | AUS | AUS |
| 7 | 0 | 1 | 1 | 0 | ungültig | | | |
| 8 | 0 | 1 | 1 | 1 | ungültig | | | |
| 9 | 1 | 0 | 0 | 0 | ungültig | | | |
| 10 | 1 | 0 | 0 | 1 | gültig | EIN | EIN/AUS | AUS |
| 11 | 1 | 0 | 1 | 0 | gültig | EIN | EIN | EIN |
| 12 | 1 | 0 | 1 | 1 | ungültig | | | |
| 13 | 1 | 1 | 0 | 0 | gültig | EIN | AUS | EIN |
| 14 | 1 | 1 | 0 | 1 | ungültig | | | |
| 15 | 1 | 1 | 1 | 0 | ungültig | | | |
| 16 | 1 | 1 | 1 | 1 | ungültig | | | |

Zunächst prüft die Steuereinheit 10 anhand vorstehender Tabelle, ob es sich bei der jeweils gewählten Schaltstellungskombination um eine logisch mögliche Kombination handelt, oder ob auf einen Fehler der Komponenten oder der Verdrahtung geschlossen werden muß. In der Tabelle wird zwischen 16 möglichen Fällen unterschieden, denen jeweils eine bestimmte Kombination von an den Eingängen 14, 16, 18 und 20 der Steuereinheit 10 anliegenden Batteriespannungen entspricht. In der Tabelle bedeutet die "0", daß die Batteriespannung nicht an dem entsprechenden Eingang anliegt, während eine "1" das Anliegen der Batteriespannung anzeigt. In einer weiteren Spalte der Tabelle wird angezeigt, ob es sich bei der vorliegenden Kombination um eine gültige Kombination handelt. Ist dies nicht der Fall, so liegt ein Komponenten oder Verdrahtungsfehler vor, was die Steuereinheit 10 veranlaßt, die Zapfwelle auszuschalten und entsprechende Warnsignale abzugeben. Liegt eine gültige Kombination vor, so ist in weiteren Spalten für die Schalter 46, 48 und 50 die zugehörige Schaltstellung angegeben.

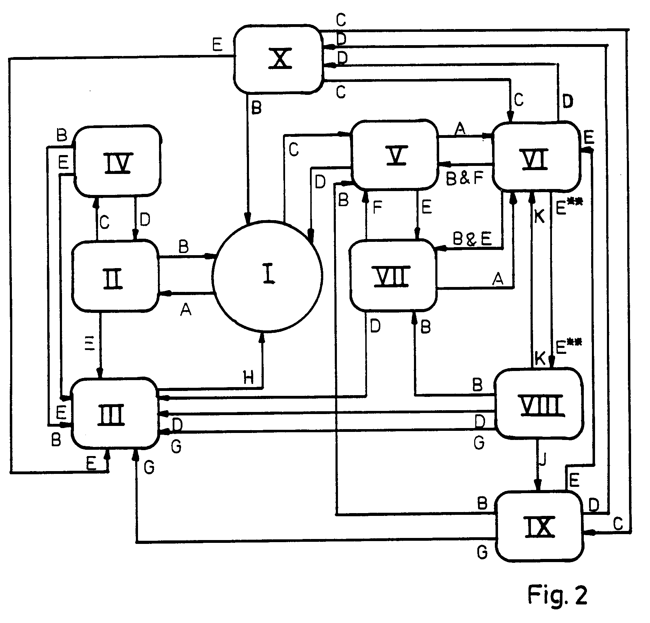

Für die gültigen Schaltkombinationen liegt der Steuereinheit 10 eine Schaltlogik zugrunde, die aus dem Zustandsdiagramm der Fig. 2 hervorgeht. Es handelt sich um ein relativ einfach ausgebildetes Zustandsdiagramm, das gegebenenfalls durch weitere zweckmäßige Funktionen ergänzt werden kann.

In dem Zustandsdiagramm der Fig. 2 sind zehn Zustände I, II, III, IV, V, VI, VII, VIII, IX und X angedeutet, die durch entsprechende Manipulationen der Schalter 46, 48 und 50 und durch Signale des Zapfwellendrehzahlmessers 32 jeweils in Pfeilrichtung A, B, C, D, E, F, G, H, J und K ineinander überführbar sind.

Den Pfeilen A bis J sind folgende Umschaltungen zugeordnet:
- A: Zapfwellenhauptschalter 46 nach EIN
- B: Zapfwellenhauptschalter 46 nach AUS
- C: Fernbedienungswahlschalter 48 nach EIN
- D: Fernbedienungswahlschalter 48 nach AUS
- E: Zapfwellenfernschalter 50 gedrückt (EIN)
- F: Zapfwellenfernschalter 50 losgelassen (AUS)
- G: Zapfwellendrehzahl fällt oder bleibt unter 100 Umdrehungen pro Minute für eine Zeitdauer von mehr als 5 Sekunden
- H: alle Schalter 46, 48 und 50 nach AUS
- J: Zapfwellenfernschalter 50 losgelassen (AUS), nachdem er für mehr als 4 Sekunden eingeschaltet war
- K: Zapfwellenfernschalter 50 losgelassen (AUS), nachdem er für weniger als 4 Sekunden eingeschaltet war
- **: nur möglich, wenn der Zapfwellenfernschalter 50 vorher losgelassen wurde

Der Zustand I ist der Grundzustand, der bei eingeschalteter Zündung des Fahrzeuges eingenommen wird. In ihm befinden sich alle Schalter 46, 48 und 50 in AUS-Stellung , und die Zapfwelle ist nicht in Betrieb.

Wird der Zapfwellenhauptschalter 46 eingeschaltet (Pfeil A), geht das System vom Grundzustand I in den Zustand II über, in dem die Zapfwelle eingeschaltet ist und die Zapfwellenanzeigeleuchte 42 leuchtet. Durch das Ausschalten des Zapfwellenhauptschalters 46 (Pfeil B) geht das System in den Grundzustand I zurück.

Wird ausgehend vom Zustand II der Zapfwellenfernschalter 50 gedrückt (Pfeil E), so geht das System in einen Alarmzustand III über, in dem automatisch die Zapfwelle ausgeschaltet wird, die Fernbedienungsanzeigeleuchte 40 und die Zapfwellenanzeigeleuchte 42 blinken. Der Alarmzustand III kann nur verlassen werden, indem alle drei Schalter 46, 48 und 50 auf AUS gestellt werden (Pfeil H). Das System geht dann in den Grundzustand I über.

Durch Ein- und Ausschalten des Fernbedienungswahlschalters 48 (Pfeile C und D) kann zwischen dem Zustand II und einem Zustand IV umgeschaltet werden, bei dem bei eingeschaltetem Fernbedienungswahlschalter 48 die Zapfwelle in Betrieb bleibt. Wird aus dem Zustand IV entweder der Zapfwellenhauptschalter 46 auf AUS geschaltet (Pfeil B) oder der Zapfwellenfernschalter 50 gedrückt (Pfeil E) so geht das System in den bereits beschriebenen Alarmzustand III über.

Wird ausgehend vom Grundzustand I der Fernbedienungswahlschalter 48 eingeschaltet (Pfeil C), so geht daß System in einen Vorbereitungszustand V für die Fernbedienung über, in dem die Zapfwelle noch abgeschaltet bleibt und die Fernbedienungsanzeigeleuchte 40 in der Fahrzeugkabine leuchtet. Durch Ausschalten des Fernbedienungswahlschalters 48 (Pfeil D) gelangt man wieder in den Grundzustand I.

Von dem Vorbereitungszustand V geht das System beim Einschalten des Zapfwellenhauptschalters 46 (Pfeil A) in den Bereitschaftszustand VI für die Fernbedienung über. Jetzt ist der Fernbedienungsmodus aktiviert, die Zapfwelle jedoch immer noch aus. Im Bereitschaftszustand VI blinken die Warnblinkleuchten 34 auf, die Fernbedienungsanzeigeleuchte 40 leuchtet, die Zapfwellenanzeigeleuchte 42 blinkt, und die akustische Warneinrichtung 38 piepst in Intervallen von 3 Hz. Durch Ausschalten des Zapfwellenhauptschalters 46 bei losgelassenem Zapfwellenfernschalter 50 (Pfeil B&F) kehrt der Bereitschaftszustand VI in den Vorbereitungszustand V zurück.

Wird ausgehend vom Bereitschaftszustand VI der Zapfwellenhauptschalter 46 bei gedrücktem Zapfwellenfernschalter 50 ausgeschaltet (Pfeil B&E), so geht das System in einen Übergangszustand VII über, in dem die Zapfwelle abgeschaltet bleibt, und die Fernbedienungsanzeigeleuchte 40 blinkt. Eine Rückkehr zum Bereitschaftsmodus VI ist durch Einschalten des Zapfwellenhauptschalters 46 möglich (Pfeil A). Durch Loslassen (Pfeil F) oder Drücken (Pfeil E) des Zapfwellenfernschalters 50 ist ein Wechsel zwischen dem Übergangszustand VII und dem Vorbereitungszustand V möglich. Wird im Übergangszustand VII der Fernbedienungswahlschalter 48 ausgeschaltet (Pfeil D), so geht das System in den Alarmzustand III über.

Wenn der Bereitschaftszustand VI vorliegt und damit der Fernbedienungsmodus aktiv ist, kann durch Drücken des Zapfwellenfernschalters 50 (Pfeil E) das System in den Zustand VIII überführt werden, in dem die Zapfwelle eingeschaltet wird. Dies ist jedoch nur möglich, wenn zuvor der Zapfwellenfernschalter 50 losgelassen wurde. Im Zustand VIII leuchten die Warnblinkleuchten für 4 Sekunden permanent auf, die Fernbedienungsanzeigeleuchte 40 und die Zapfwellenanzeigeleuchte 42 leuchten, und die akustische Warneinrichtung 38 piepst mit einem gegenüber dem Bereitschaftszustand VI geänderten Intervall von 1 Hz.

Wird während des Zustandes VIII der Zapfwellenfernschalter 50 nicht wenigstens für 4 Sekunden gedrückt (Pfeil K), so kehrt das System in den Bereitschaftszustand VI zurück. Andernfalls (Pfeil J) wird der Zapfwellenbetriebszustand IX eingenommen, in dem die Zapfwelle in Betrieb bleibt sowie die Fernbedienungsanzeigeleuchte 40 und die Zapfwellenanzeigeleuchte 42 leuchten. Durch erneutes Drücken des Zapfwellenwahlschalters 50 (Pfeil E) wird die Zapfwelle ausgeschaltet und es erfolgt ein Übergang vom Zapfwellenbetriebszustand IX zum Bereitschaftszustand VI.

Wird im Zustand VIII der Zapfwellenhauptschalter 46 ausgeschaltet (Pfeil B), so geht das System in den Übergangszustand VII über, von dem aus die Zapfwelle wieder eingeschaltet werden kann, indem der Zapfwellenhauptschalter 46 eingeschaltet (Pfeil A) und der Zapfwellenfernschalter 50 gedrückt wird (Pfeil E). Wird hingegen im Zustand VIII der Fernbedienungswahlschalter 48 ausgeschaltet (Pfeil D), so geht das System in den Alarmzustand III über.

Bleibt bei eingeschalteter Zapfwelle deren Drehzahl länger als 5 Sekunden unter 100 Umdrehungen pro Minute (Pfeil G), so geht das System vom Zustand VIII oder vom Zapfwellenbetriebszustand IX in den Alarmzustand III über, in dem automatisch die Zapfwelle ausgeschaltet wird.

Wird ausgehend von dem Bereitschaftszustand VI oder vom Zapfwellenbetriebszustand IX der Fernbedienungswahlschalter 48 ausgeschaltet (Pfeil D), so geht das System in einen Ruhezustand X über, in dem der jeweilige Ausgangszustand VI oder IX abgespeichert ist, sonst jedoch keine Änderungen vorgenommen werden. Wird der Fernbedienungswahlschalter 48 wieder eingeschaltet (Pfeil C), so kehrt das System in seinen vorherigen Zustand zurück. Wird im Ruhezustand X der Zapfwellenhauptschalter 46 ausgeschaltet (Pfeil B), so geht das System in seinen Grundzustand I über. Durch Drücken des Zapfwellenfernschalters 50 (Pfeil E) wird der Alarmzustand III eingenommen.

## Patentansprüche

1. Zapfwellensteuerung zum Ein- und Abschalten wenigstens einer Fahrzeugzapfwelle mit einem am Fahrzeugbedienungsstand angeordneten Hauptschaltelement (46) und wenigstens einem an der Fahrzeugperipherie angeordneten, als Tastschalter ausgebildeten Fernschaltelement (50) zur Fernbetätigung der Zapfwelle, gekennzeichnet durch eine mit dem Hauptschaltelement (46) und dem Fernschaltelement (50) verbundene Steuereinrichtung (10) und ein am Fahrzeugbedienungsstand angeordnetes, an die Steuereinrichtung (10) angeschlossenes Auswahlschaltelement (48) zur Umschaltung zwischen einem Standardmodus, in dem die Zapfwelle von dem Hauptschaltelement (46) ein und abschaltbar ist, und einem Fernbedienungsmodus, in dem die Zapfwelle von dem Fernschaltelement (50) ein und abschaltbar ist.

2. Zapfwellensteuerung nach Anspruch 1, dadurch gekennzeichnet, daß die Steuereinrichtung (10) Mittel enthält, die eine Aktivierung des Fernbedienungsmodus nur bei abgeschalteter Zapfwelle zuläßt.

3. Zapfwellensteuerung nach Anspruch 1 oder 2, dadurch gekennzeichnet, daß die Steuereinrichtung (10) Mittel enthält, durch die der Fernbedienungsmodus nur dann aktivierbar ist, wenn durch das Auswahlschaltelement (48) der Fernbedienungsmodus angewählt und dann das Hauptschaltelement (46) eingeschaltet wurde.

4. Zapfwellensteuerung nach einem der Ansprüche 1 bis 3, dadurch gekennzeichnet, daß nach Abbruch einer die Zapfwelle einschaltenden Betätigung des Fernschaltelements (50) im Fernbedienungsmodus die Zapfwelle nur dann permanent eingeschaltet bleibt, wenn die Betätigungsdauer eine durch ein Zeitglied der Steuereinrichtung (10) vorgebbare Zeitspanne übersteigt.

5. Zapfwellensteuerung nach einem der Ansprüche 1 bis 4, dadurch gekennzeichnet, daß eine im Normalmodus oder im Fernbedienungsmodus eingeschaltete Zapfwelle sowohl durch Betätigung des Fernschaltelements (50) als auch des Hauptschaltelements (46) abschaltbar ist.

6. Zapfwellensteuerung nach einem der Ansprüche 1 bis 5, dadurch gekennzeichnet, daß eine Fernmodusleuchtanzeige (40), ein Zapfwellenanzeigeleuchte (42) und/oder eine akustische Signaleinrichtung (38) am Bedienungsstand vorgesehen ist, um den Betriebszustand der Zapfwellensteuerung anzuzeigen.

7. Zapfwellensteuerung nach Anspruch 6, dadurch gekennzeichnet, daß die Ferumodusleuchtanzeige (40) automatisch eingeschaltet wird, wenn das Auswahlschaltelement (48) in den Fernbedienungsmodus umgeschaltet ist.

8. Zapfwellensteuerung nach Anspruch 7, dadurch gekennzeichnet, daß nach dem Einschalten des Hauptschaltelements (46) die Zapfwellenanzeigeleuchte (42) zu blinken beginnt und/oder ein Tonsignal in einem vorgebbaren Rhythmus ertönt.

9. Zapfwellensteuerung nach Anspruch 8, dadurch gekennzeichnet, daß bei Betätigung des Fernschaltelements (50) im Fernbedienungsmodus, durch die die Zapfwelle eingeschaltet wird, ein Blinksignal der Zapfwellenanzeige (42) für ein vorgebbares Zeitintervall in ein Dauerlicht übergeht, wobei das Zeitintervall vorzugsweise wenigstens die Länge der Zeitspanne hat, die vorgegeben ist, um die Zapfwelle permanent einzuschalten.

10. Zapfwellensteuerung nach einem der Ansprüche 1 bis 9, dadurch gekennzeichnet, daß das Fahrzeug eine Warnblinkanlage enthält und daß die Warnblinkleuchten (34) mit Aktivierung des Fernbedienungsmodus automatisch aufblinken.

11. Zapfwellensteuerung nach Anspruch 10, dadurch gekennzeichnet, daß die Warnblinkleuchten (34) automatisch erlöschen, wenn im Fernbedienungsmodus die Zapfwelle eingeschaltet wird.

12. Zapfwellensteuerung nach einem der Ansprüche 6 bis 11, dadurch gekennzeichnet, daß die akustische Signaleinrichtung (38) eine Signaltonfolge abgibt, sofern der Fernbedienungsmodus aktiviert ist.

13. Zapfwellensteuerung nach Anspruch 12, dadurch gekennzeichnet, daß die Tonfrequenz und/oder Taktfrequenz der Signaltonfolge sich automatisch ändert, wenn in dem Fernbedienungsmodus die Zapfwelle durch das Fernschaltelement (50) ein oder abgeschaltet wird.

14. Zapfwellensteuerung nach einem der Ansprüche 1 bis 13, dadurch gekennzeichnet, daß ein Zapfwellendrehzahlsensor (32) vorgesehen ist und daß nach einem Einschalten der Zapfwelle diese wieder automatisch abgeschaltet wird und gegebenenfalls Warnsignale abgegeben werden, sofern für eine vorgebbare Zeitspanne die Zapfwellendrehzahl einen vorgebbaren Drehzahlwert unterschreitet.

15. Zapfwellensteuerung nach einem der Ansprüche 1 bis 14, dadurch gekennzeichnet, daß die Steuereinrichtung (10) Überwachungsmittel enthält, die die Funktionalität der Bauelemente der Zapfwellensteuerung laufend überwachen und bei Auftreten von Fehlern die Zapfwelle automatisch abschalten und gegebenenfalls Warnsignale abgeben.

## Claims

1. A PTO shaft control system for engaging and disengaging at least one PTO shaft, with a main switch element (46) arranged at the vehicle operator station and at least one remote switch element (50) arranged at the vehicle periphery and in the form of a push-button switch for remote control of the PTO shaft, characterized by a control device (10) connected to the main switch element (46) and the remote switch element (50) and a selector switch element (48) arranged at the vehicle operating station and connected to the control device (10) for switching over between a standard mode, in which the PTO shaft can be engaged and disengaged from the main switch element (46) and a remote operation mode, in which the PTO shaft can be engaged and disengaged from the remote switch element (50).

2. A PTO shaft control system according to claim 1, characterized in that the control device (10) includes means for allowing activation of the remote operation mode only with the PTO shaft disengaged.

3. A PTO shaft control system according to claim 1 or 2, characterized in that the control device (10) includes means through which the remote operation mode can only be activated when the remote operation mode is selected by the selector switch element (48) and then the main switch element (46) is switched on.

4. A PTO shaft control system according to any of claims 1 to 3, characterized in that, after an interruption of an actuation of the remote switch element (50) engaging the PTO shaft in the remote operation mode, the PTO shaft only remains permanently engaged when the duration of actuation exceeds a time set by a delay element of the control device (10).

5. A PTO shaft control system according to any of claims 1 to 4, characterized in that a PTO shaft which is engaged in the normal mode or in the remote operation mode can be disengaged both by actuation of the remote switch element (50) and actuation of the main switch element (46).

6. A PTO shaft control system according to any of claims 1 to 5, characterized in that a remote mode visual display (40), a PTO shaft display lamp (42) and/or an acoustic signal device (38) is provided at the operator station, in order to indicate the operating state of the PTO shaft control system.

7. A PTO shaft control system according to claim 6, characterized in that the remote mode visual display (40) is automatically switched on when the selector switch element (48) is switched over to the remote operation mode.

8. A PTO shaft control system according to claim 7 characterized in that, after switching on the main switch element (46), the PTO shaft display lamp (42) begins to flash and/or the audio signal begins to sound with a predetermined rhythm.

9. A PTO shaft control system according to claim 8, characterized in that, an operation of the remote switch element (50) in the remote operation mode, through which the PTO shaft is engaged, a flashing signal of the PTO shaft display (42) for a predetermined interval of time changes into a constant light, where the interval of time is preferably at least the length of the time which is set for permanently engaging the PTO shaft.

10. A PTO shaft control system according to any of claims 1 to 9, characterized in that the vehicle has a warning flasher unit and in that the warning flashing lights (34) automatically flash on activation of the remote operation mode.

11. A PTO shaft control system according to claim 10, characterized in that the warning flashing lights (34) are automatically turned off when the PTO shaft is switched off in the remote operation mode.

12. A PTO shaft control system according to any of claims 6 to 11, characterized in that the acoustic signal device (38) emits a signal audio sequence so long as the remote operation mode is activated.

13. A PTO shaft control system according to claim 12, characterized in that the audio frequency and/or repetition frequency of the signal audio sequence automatically changes when the PTO shaft is engaged or disengaged by the remote switch element (50) in the remote operation mode.

14. A PTO shaft control system according to any of claims 1 to 13, characterized in that a PTO shaft speed sensor (32) is provided and in that, after engaging the PTO shaft, this is automatically disengaged again and a warning signal is optionally emitted, should the PTO shaft speed fall below a predetermined speed for a predetermined interval of time.

15. A PTO shaft control system according to any of claims 1 to 14, characterized in that the control device (10) includes monitoring means which constantly monitor the functionality of the components of the PTO shaft control system and automatically disengage the PTO shaft and optionally emit warning signals on the occurrence of faults.

## Revendications

1. Unité de commande d'arbre de prise de force pour l'accouplement et le désaccouplement d'au moins un arbre de prise de force du véhicule, comportant un élément de commutation principal (46) disposé sur le panneau de commande du véhicule, et au moins un élément de commutation à distance (50) disposé sur la périphérie du véhicule et agencé sous la forme d'un poussoir et servant à actionner à distance l'arbre de force, caractérisée par un dispositif de commande (10), qui est relié à l'élément de commutation principal (46) et à l'élément de commutation à distance (50), et par un élément de commutation de sélection (48) disposé sur le panneau de commande du véhicule et raccordé au dispositif de commande (10) et qui sert à réaliser une commutation entre un mode standard, dans lequel l'arbre de prise de force peut être raccordé et débranché par l'élément de commutation principal (46), et un mode de télécommande, dans lequel l'arbre de prise de force peut être accouplé et désaccouplé par l'élément de commutation à distance (50).

2. Unité de commande d'arbre de prise de force selon la revendication 1, caractérisée en ce que le dispositif de commande (10) contient des moyens qui permettent une activation du mode de télécommande uniquement lorsque l'arbre de prise de force est désaccouplé.

3. Unité de commande d'arbre de prise de force selon la revendication 1 ou 2, caractérisée en ce que le dispositif de commande (10) contient des moyens à l'aide desquels le mode de télécommande peut être activé uniquement lorsque le mode de télécommande a été sélectionné au moyen de l'élément de commutation de sélection (46) et qu'ensuite l'élément de commutation principal (46) a été activé.

4. Unité de commande d'arbre de prise de force selon l'une des revendications 1 à 3, caractérisée en ce qu'après l'interruption d'un actionnement de l'élément de commutation à distance (50), qui accouple l'arbre de prise de force, dans le mode de télécommande l'arbre de prise de force reste accouplé d'une manière permanente uniquement lorsque la durée d'actionnement dépasse un intervalle de temps pouvant être prédéterminé par une minuterie du dispositif de commande (10).

5. Unité de commande d'arbre de prise de force selon l'une des revendications 1 à 4, caractérisée en ce qu'un arbre de prise de force, qui est accouplé dans le mode normal ou dans le mode de télécommande, peut être désaccouplé aussi bien par actionnement de l'élément de commutation à distance (50) qu'au moyen de l'élément de commutation principal (46).

6. Unité de commande d'arbre de prise de force selon l'une des revendications 1 à 5, caractérisée en ce qu'il est prévu une lampe d'affichage de mode de télécommande (42) de l'arbre de prise de force et/ou un dispositif (38) de transmission de signaux acoustiques sur le panneau de commande, de manière à indiquer l'état de fonctionnement de l'état de commande de l'arbre de prise de force.

7. Unité de commande d'arbre de prise de force selon la revendication 6, caractérisée en ce que la lampe d'affichage (40) du mode de télécommande est allumée automatiquement lorsque l'élément de commutation de sélection (48) est commuté dans le mode de télécommande.

8. Unité de commande d'arbre de prise de force selon la revendication 7, caractérisée en ce qu'après l'activation de l'élément de commutation principal (46), la lampe d'affichage (42) de l'arbre de prise de force commence à clignoter et/ou un signal acoustique retentit selon un rythme pouvant être prédéterminé.

9. Unité de commande d'arbre de prise de force selon la revendication 8, caractérisée en ce que, lors de l'actionnement de l'élément de commutation à distance (50) dans le mode de télécommande, l'actionnement qui provoque l'accouplement de l'arbre de prise de force, un signal clignotant du témoin d'affichage (42) de l'arbre de prise de force passe, pendant un intervalle de temps pouvant être prédéterminé, à une lumière continue, l'intervalle de temps possédant de préférence au moins la longueur de l'intervalle de temps qui est prédéterminé pour réaliser l'accouplement permanent de l'arbre de prise de force.

10. Unité de commande d'arbre de prise de force selon l'une des revendications 1 à 9, caractérisée en ce que le véhicule contient une centrale de clignotement d'avertissement et que les feux clignotants d'avertissement (34) clignotent automatiquement lors de l'activation du mode de télécommande.

11. Unité de commande d'arbre de prise de force selon la revendication 10, caractérisée en ce que les clignotants d'avertissement (34) s'éteignent de façon automatique lors que l'arbre de prise de force est accouplé dans le mode de télécommande.

12. Unité de commande d'arbre de prise de force selon l'une des revendications 6 à 11, caractérisée en ce que le dispositif de signalisation acoustique (38) délivre une suite de signaux acoustiques dans la mesure où le mode de télécommande est activé.

13. Unité de commande d'arbre de prise de force selon la revendication 12, caractérisée en ce que la fréquence acoustique et/ou la fréquence de la séquence de signaux acoustiques sont modifiées automatiquement lorsque, dans le mode de télécommande, l'arbre de prise de force est accouplé ou désaccouplé par l'élément de commutation à distance (50).

14. Unité de commande d'arbre de prise de force selon l'une des revendications 1 à 13, caractérisée en ce qu'il est prévu un capteur (32) de la vitesse de rotation de l'arbre de prise de force et qu'après l'accouplement de l'arbre de prise de force, ce dernier est à nouveau automatiquement désaccouplé et éventuellement des signaux d'avertissement sont délivrés dans la mesure où la vitesse de rotation de l'arbre de prise de force tombe, pendant un intervalle de temps pouvant être prédéterminé, au-dessous d'une valeur de la vitesse de rotation pouvant être prédéterminée.

15. Unité de commande d'arbre de prise de force selon l'une des revendications 1 à 14, caractérisée en ce que le dispositif de commande (10) contient des moyens de contrôle, qui contrôlent en permanence l'aptitude au fonctionnement des composants de l'unité de commande de l'arbre de prise de force et, lors de l'apparition d'erreurs, désaccouplent automatiquement l'arbre de prise de force et délivrent éventuellement des signaux d'avertissement.
